Europäisches Patentamt

European Patent Office

Office européen des brevets

(11) Veröffentlichungsnummer: **0 424 814 A1**

# EUROPÄISCHE PATENTANMELDUNG

(21) Anmeldenummer: 90120046.9

(51) Int. Cl.⁵: **H01M 8/24, H01M 8/12**

(22) Anmeldetag: **19.10.90**

(30) Priorität: **24.10.89 DE 3935310**

(43) Veröffentlichungstag der Anmeldung:
**02.05.91 Patentblatt 91/18**

(84) Benannte Vertragsstaaten:
**CH DE FR GB IT LI NL SE**

(71) Anmelder: **Asea Brown Boveri
Aktiengesellschaft
Kallstadter Strasse 1**

W-6800 Mannheim 31(DE)

(72) Erfinder: **Rohr, Franz, Dr.
Forstweg 2
W-6941 Abtsteinach(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

(54) Brennstoffzellenanordnung und Verfahren zu deren Herstellung.

(57) Die Erfindung bezieht sich auf eine Brennstoffzellenanordnung (1), die durch das Aufeinanderstapeln von mehreren Brennstoffzellen (2Z) gebildet wird. Jede Brennstoffzelle (2Z) wird durch ein- oder mehrschichtig ausgebildete Folien (6,5,3,4) gebildet.

Durch eine gezielte Wärmebehandlung werden die Schichten (3A,3E,3K, 4A,5A,6B,6L und 6M) sowie die Folien (3,4,5 und 6) dauerhaft zu einer Einheit zusammengefügt.

## Fig. 1

## BRENNSTOFFZELLENANORDNUNG UND VERFAHREN ZU DEREN HERSTELLUNG

Die Erfindung bezieht sich auf eine Brennstoffzellenanordnung mit wenigstens einer Brennstoffzelle gemäß dem Oberbegriff des Patentanspruches 1, sowie ein Verfahren zu deren Herstellung.

Eine solche Brennstoffzellenanordnung kann beispielsweise als Stromquelle genutzt werden. Aus der Informationsschrift "High Temperature Fuel Cells," Solid Elektrolytes, 1978, F.J. Rohr, ist eine keramische Brennstoffzelle mit sauerstoffionenleitendem Festelektrolyten sowie einer Anode und einer Kathode bekannt. Diese Einrichtung ermöglicht es, bei Temperaturen von mehr als 800 $^\circ$ C die chemische Energie eines Brennstofs, z.B. von vergaster Kohle, Erdöl, Erdgas oder Wasserstoff durch elektrochemische Oxidation mit Sauerstoff direkt in elektrische Energie umzuwandeln. Die Energieumwandlung erfolgt mit einem Wirkungsgrad, der größer ist als 50%. Es sind Brennstoffzellenanordnungen bekannt, die durch das Zusammenfassen und in Reihe schalten von mehreren einzelnen Brennstoffzellen gebildet werden. Dies Anordnungen sind für einen wirtschaftlichen technischen Einsatz wenig geeignet. Für ihre Herstellung sind hohe Aufwendungen an Material und Fertigungskosten erforderlich.

Der Erfindung liegt ausgehend von dem eingangs genannten Stand der Tecknik die Aufgabe zugrunde, eine Brennstoffzellenanordnung zu schaffen, die den Anforderungen des technischen Einstazes genügt, sowie ein Verfahren aufzuzeigen, mit dem eine solche Brennstoffzellenanordnung auf einfache Weise hergestellt werden kann.

Ein solche Brennstoffzellenanordnung ist in Patentanspruch 1 offenbart.

Ein Verfahren zur Herstellung dieser Brennstoffzellenanordnung ist in Anspruch 9 offenbart.

Weitere erfindungswesentliche Merkmale sind in den Unteransprüchen gekennzeichnet.

Die erfindungsgemäße Brennstoffzelenanordnung und ihre Herstellung wird nachfolgend anhand von schematischen Zeichnungen näher erläutert. Es zeigen:

Fig. 1 eine erfindungsgemäße Brennstoffzellenanordnung,

Fig. 2 den Aufbau einer Brennstoffzelle.

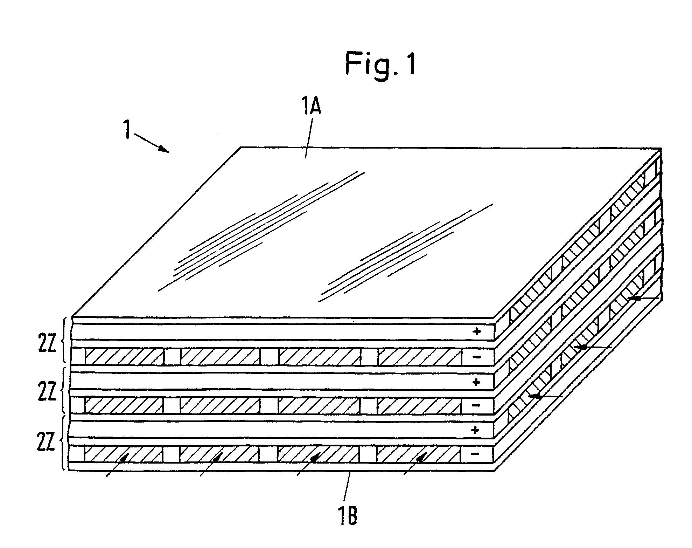

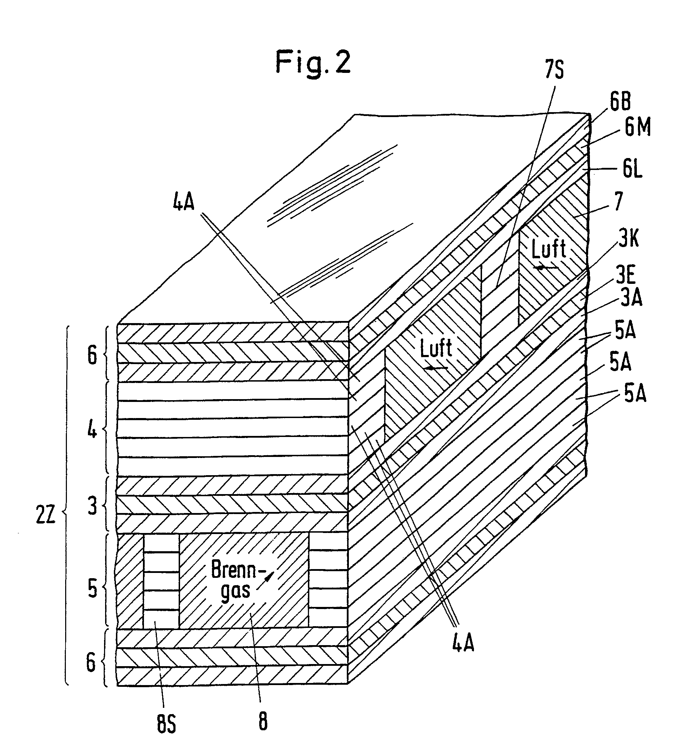

In Fig. 1 ist der Ausschnitt aud einer erfindungsgemäßen Brennstoffzellenanordnung 1 dargestellt. Diese wird im wesentlichen durch drei Brennstoffzellen 2Z gebildet. Die Brennstoffzellen 2Z sind, eine Stapel bildend, aufeinandergesetzt und dauerhaft miteinander verbunden. Alle drei Brennstoffzellen 2Z sind identisch ausgebildet. Eine Brennstoffzelle 2Z ist in Fig. 2 im Detail dargestellt. Jede Brennstoffzelle 2Z wid durch mehrere Folien 3,4,5 und 6 gebildet. Die Folien weisen unterschiedliche Eingenschaften auf und sind zudem mehrschichtig aufgebaut. Kernstück einer jeden Brennstoffzelle bildet die Folie 3, die aus drei Schichten 3A, 3E und 3K zusammengesetzt ist. Bei der Schicht 3E handelt es sich um eine gasdichte Festelektrolytschicht aus sauerstoffionenleitendem Zirkoniumoxid mit der Zusammensetzung $(ZrO_2)_{0,9}(Y_2O_3)_{0,1}$. Die Dicke der Schicht beträgt 0,05 bis 0,15 mm. Auf die erste Oberfläche dieser als Festelektrolyt dienenden Schicht 3E ist eine als Anode dienende Schicht 3A aufgebracht. Diese besteht aus einem Cermet, das aus Nickel und stabilisiertem Zirkoniumdioxid ($ZrO_2/Y_2O_3$ oder $ZrO_2/CaO$) besteht. Die Schicht ist porös, und weist eine Dicke von 0,05 bis 0,15 mm auf. Auf die zweite Oberfläche der Schicht 3E ist eine als Kathode dienende Schicht 3K aufgetragen. Sie ist porös, weist eine Dicke von 0,1 bis 0,3 mm auf und besteht aus einem elektronenleitenden Mischoxid. Dieses weist die Zusammensetzung $La(Sr)MnO_3$ auf. Die Schicht 3K kann auch durch ein Cermet dieses Mischoxids mit Zirkoniumdioxid gebildet werden, das mit 15 Mol% CaO oder 8 bis -10 Mol% $Y_2O_3$ stabilisiert ist. Auf die Oberfläche der Schicht 3K ist die Folie 4 aufgebracht. Sie wird durch mehrere gasdichte Schichten 4A gebildet. Bei dem hier dargestellten Ausführungsbeispiel sind fünf Schichten 4A vorgesehen. Die Schichten 4A sind 0,3 bis 0,8 mm dick und aus $La(Sr)MnO_3$ + 20 bis 60% $ZrO_2/Y_2O_3$ oder $ZrO_2/CaO$ gefertigt. Wie Fig. 2 zeigt, ist die Folie 4 von Kanälen 7 durchsetzt. Aufgabe dieser Kanäle 7 ist es, der als Kathode dienenden Schicht 3K Luft oder Sauerstoff zuzuführen. Die Kanäle 7 grenzen deshalb auf der einen Seite unmittelbar an die Schicht 3K an. Die Höhe der Kanäle 7 beträgt 1 bis 5 mm. Diese Höhe kann durch entsprechende Ausbildung der Schichten 4A erzielt werden. Die Kanäle 7 sind so angeordnet, daß sie die Folie 4 vollständig durchsetzen und nach außen hin an beiden Enden geöffnet sind. Die Kanäle 7 sind 5-20 mm breit und durch Stege 7S mit einer Breite zwischen 2 und 4 mm über ihre gesamte Länge voneinander getrennt. Die Kanäle 7 sind ferner so angeordnet, daß ihre Längsachsen parallel zueinander verlaufen. Auf die Folie 4 ist eine Folie 6 aufgebracht, die durch Schichten 6B,6M und 6L gebildet wird. Die Schicht 6L grenzt unmittelbar an die Folie 4 an. Durch sie werden auch die Kanäle 7 begrenzt. Bei der Folie 6 handelt es sich um eine elektrisch leitende Schicht, mit welcher die elektrisch leitende Verbindung der einzelnen Brennstoffzellen 2Z, insbesondere die serielle Verschaltung der Brennstoffzellen 2Z zu der erfindungsgemäßen Brennstoffzelenanordnung 1 erzielt wird. Die Schicht 6L ist aus $La(Sr)MnO_3$

mit Zusätzen an stabilisiertem Zirkoniumdioxid gefertigt. Die Dicke der Schicht 6L beträgt 0,1 bis 0,3 mm. Auf diese Schicht 6L ist die Schicht 6M aufgetragen. Sie besteht aus einem gasdichten elektronenleitenden Mischoxid, das die Zusammensetzung La(Sr)CrO$_3$ aufweist. Die Schicht 6M kann auch durch La(Mg)CrO$_3$ mit oder ohne Zusätze von stabilisiertem Zirkoniumdioxid gefertigt werden. Ihre Dicke beträgt 0,05 bis 0,15 mm. Auf die Schicht 6M ist zur Ausbildung der Folie 6 die Schicht 6B aufgetragen. Sie ist aus Ni/ZrO$_2$ Cermet hergestellt und weist eine Dicke von 0,05 bis 0,15 mm auf. Es besteht die Möglichkeit, auf die Schichten 6B und 6L zu verzichten, und die Folie 6 nur durch die Schicht 6M zu bilden. In diesem Fall wird die Schicht 6M 0,1 bis 0,3 mm dick ausgebildet. Wie anhand von Fig. 2 zu sehen ist, ist auf der zweiten oberfläche der Folie 3 eine Folie 5 angeordnet. Diese wird durch fünf aus dem gleichen Material hergestellte Schichten 5A gebildet. Die Schichten 5A sind aus einem Cermet aus Nickel und stabilisiertem Zirkoniumdioxid gefertigt und weisen eine Dicke von 0,3 bis 0,5 mm auf.

Die Schichten 5A können auch aus Nickel-Zirkoniumoxid-Cermet mit einem Zusatz von 20 bis 70% ZrO$_2$/Y$_2$O$_3$ oder ZrO$_2$/CaO gefertigt werden. Die Folie 5 ist, wie anhand von Fig. 2 zu sehen ist, von durchgehenden Kanälen 8 durchsetzt, die an beiden Enden nach außen hin offen sind. Die Höhe der Kanäle 8 entspricht der Dicke der Folie 5. Durch entsprechende Ausbildung der Schichten 5A kann die Höhe der Kanäle 8, wie gewünscht, ausgebildet werden. Sie beträgt bei dem hier dargestellten Ausführungsbeispiel 1 bis 3 mm. Die Breite der Kanäle 8 beträgt 5 bis 20 mm. Die Kanäle 8 sind voneinander durch Stege 8S getrennt, die eine Breite von 2 bis 4 mm aufweisen. Die Kanäle 8 sind so angeordnet, daß ihre Längsachsen parallel zueinander verlaufen. Die Längsachsen der Kanäle 8 wiederum verlaufen senkrecht zu den Längsachsen der Kanäle 7. Die Kanäle 8 werden von der als Anode dienenden Schicht 3A der Folie 3 begrenzt. Eine weitere Begrenzung bildet die Folie 6. Wird diese, wie oben erläutert, durch die drei Schichten 6B, 6M und 6L gebildet, so erfolgt die Begrenzung der Kanäle 8 durch die Schicht 6B. Jede Brenstoffzelle 2Z wird nur mit einer solchen Folie 6 ausgebildet. Die Folie 6 wird entweder angrenzend an die Folie 4 angeordnet und begrenzt damit mit der Schicht 6L die Kanäle 7, oder die Brennstoffzelle 2Z wird im Anschluß an die Folie 5 mit einer Folie 6 versehen, welche dann die Kanäle 8 verschließt, wobei die Schicht 6B dann die Kanäle 8 begrenzt. Die in Fig. 1 dargestellte Brennstoffzellenanordnung 1 wird durch unlösbares Aufeinanderstapeln bzw. Verbinden dreier solcher Brenstoffzellen 2Z gebildet. Die Anzahl der Brennstoffzellen ist nicht auf drei begrenzt. Vielmehr kann sie wesentlich größer sein. Sie richtet sich vor allem nach der Größe der Spannung, die von der Brennstoffzellenanordnung erzeugt werden soll. Bei dem hier dargestellten Ausführungsbeispiel weise die Folien einen quadratischen oder rechteckigen Querschnitt von 5x5 cm$^2$ bis 50x50 cm$^2$ auf. Bei Verwendung von einer Brennstoffzelle 2Z mit dem oben beschriebenen Abmessungen der Schichten 3,4,5 und 6 kann hiermit eine Gleichspannung von 1 Volt erzeugt werden. Durch entsprechende Serienschaltung mehrerer solcher Brennstoffzellen 2Z kann mit der Brennstoffzellenanordnung 1 jede gewünschte Spannung erzeugt werden.

Die Herstellung der Folien 3,4,5 und 6 sowie der gesamten Brennstoffzellenanordnung nach Fig. 1 wird nachfolgend erläutert. Die Herstellung der Brennstoffzellenanordnung erfolgt durch schichtweisen Aufbau aus den gasdichten bzw. porösen ionen- und elektronenleitenden keramischen Folien. Die dauerhafte Zusammenfügung der Brennstoffzellenanordnung wird duch Sintern der aufeinandergesetzten einzelnen Brennstoffzellen 2Z erreicht. Damit eine gemeinsame Sinterung aller Folien bzw. aller Schichten zu einem keramischen Block durchgeführt werden kann, müssen die Materialien, aus denen die Folien bzw. die einzelnen Schichten der Folien hergestellt sind, bezüglich ihrer thermomechanischen und chemischen Eigenschaften miteinander verträglich sein. Als bezugsmaterial und überweigend eingesetztes Mischoxid wird Zirkoniumdioxid verwendet, das mit 8 bis 10 Mol% Yttriumoxid dotiert ist. Dieses Material weist bei 1000° C einen thermischen Ausdehungskoeffizienten von ca. 10,5x10$^{-6}$/Grad auf. Dieses Material wird zur Ausbildung der gasdichten Festelektrolytschicht 3E, den porösen als Anode und als Kathode dienenden Schichten 3A und 3K sowie als Zusatz zur Ausbildung der elektrisch leitenden Folie 6 mit ihren Schichten 6B,6M und 6L verwendet. Als Cermetmaterial wird dieser Werkstoff in Verbindung mit La(Sr)MnO$_3$ zur Ausbildung der Folie 4, der als Kathode dienenden Schicht 3K und der Schicht 6L verwendet. In Verbindung mit Nickel wird dieses Bezugsmaterial für die Fertigung der Folie 5, der als Anode dienenden Schicht 3A und der Schicht 6B in der Folie 6 verwendet. Der Anteil an stabilisiertem Zirkoniumdioxid kann in den einzelnen Schichten 20 bis 70 Gew% betragen. Zur weiteren Senkung der Materialkosten besteht die Möglichkeit, das mit Yttriumoxid dotierte Zirkonoxid ZrO$_2$/Y$_2$O$_3$ in allen Schichten, außer in 3E, 3A und 3K, durch Kalziumoxid dotiertes Zirkonoxid ZrO$_2$/CaO oder durch noch kostengünstigeren magnesium-Aluminiumoxid-Spinell MgAl$_2$O$_4$ zu ersetzen. Die elektrisch leitende Schicht 6M der Folie 6 ist aus elektrischleitendem La(Sr)CrO$_3$ oder aus La(Mg)CrO$_3$ gefertigt und kann mit oder ohne ZrO$_2$/Y$_2$O$_3$ gefertigt werden. Da sich der thermische Ausdehnungskoeffizient des stabilisierten Zirkoniumoxids von dem des Lanthan-Strontium-Chromit und von dem des Lanthan-Magnesium-Chromit nicht wesentlich unterscheidet, und sich diese Stoffe auch bei hohen Temperaturen chemisch gut vertragen, ist es möglich, die Brennstoffzellenanordnung 1 zunächst aus ungesinterten Folien mit der oben beschriebenen Schichtenfolge herzustellen. Wärend eines anschließenden thermischen prozesses werden die Folien zusammengesintert, wodurch aus den einzelnen Folien bzw. Brennstoffzellen die Brennstoffzellenanordnung gebildet wird. Die Folien 3,4,5 und 6 bzw. die sie bildenden Schichten einer jeden Brennstoffzelle 2Z werden durch Foliengießtechnik oder Seibdruck hergestellt, und im ungesinterten Zustand durch Schneiden oder Stanzen in die gewünschten Formen gebracht.

Die Folie 3 wird durch drei Schichten 3A,3E und 3K gebildet. Jede der drei Schichten 3A,3K und 3E kann durch Foliengießen aus einer Suspension gewonnen werden. Zur Ausbildung dieser Suspension bzw. dieses Schlickers wird ein Pulver des Werkstoffs verwendet, der eingangs für die Herstellung dieser Schichten beschrieben ist. Dieses Pulver wird mit einem organischen Lösungsmittel, beispielsweise einem Gemisch aus einem Alkohol, Keton und Oleat sowie einen Bindemittel, beispielsweise einem Gemisch aus Polyglycol, Polyvinylbutyral und Octylphthalat zu der Suspension vermischt. Durch bekannte Verfahren können die jeweils gewünschten Schichten aus den so hergestellten Suspensionen bzw. Schlickern gebildet werden. Damit beim späteren Sintern der Schicht 3E eine gasdichte Elektrolytschicht 3E entsteht, muß eine Suspension aus einem ultrafeinen Pulver mit einer Korngröße kleiner/gleich 1 μm und mit möglichst wenig organischem Bindemittel, weniger als 8%, hergestellt werden. Damit die Schichten 3A und 3K der Folie 3 später die gewünschte Porosität besitzen, müssen für die Ausbildung dieser Schichten Suspensionen aus einem Pulver hergestellt werden, dessen Korngröße größer/gleich 5 μm ist. Zusätzlich muß der Anteil an organischem Bindemitteln größer als 10% sein. Erfindungsgemäß besteht die Möglichkeit, zuerst die Elektrolytischicht 3E durch Foliengießen herzustellen und anschließend auf die erste Oberfläche die als Anode dienende Schicht 3A und auf die zweite Oberfläche die als Kathode dienende Schicht 3K durch Siebdruck aufzubringen. Durch eine Wärmebehandlung werden die Schichten 3A und 3K mit der Elektrolyschicht 3E verbunden. Die Folie 4, ist so auszubilden, daß sie die in Fig. 2 dargestellten kanäle 7 aufweist, über welche der Schicht 3K der Folie 3 Luft oder Sauerstoff zugeführt werden können. Gleichzeitig muß die Folie 4 sehr gut elektronenleitend sein, um eine elektrische Verbindung zwischen der elektrisch leitenden Folie 6 und der als Kathode dienenden Schicht 3K zu bewirken. Die Folie 4 wird entsprechend der gewünschten Höhe und Breite der Kanäle 7 aus mehreren Schichten 4A gebildet. Die Schichten 4A werden einzeln aus einer Suspension hergestellt. Die Suspension bzw. der Schlicker wird aus einem feinkörnigen Pulver mit einer Korngröße kleiner 5 μm und geeigneten organischen Lösungs- und Bindemitteln hergestellt. Die aus der Suspension durch Foliengießen gefertigten Schichten werden aufeinandergestapelt. Anschließend werden die Kanäle 7 in der gewünschten Breite ausgestanzt, wobei zwischen jeweils zwei aufeinanderfolgenden Kanälen ein Steg verbleibt, der die eingangs beschriebene Breite aufweist. In gleicher Weise wie die Folie 4 wird auch die Folie 5 gefertigt. Sie wird durch das Aufstapeln mehrerer Schichten 5A gebildet. Die Schichten selbst werden aus einer Suspension bzw. einem Schlicker gefertigt. Für die Aubildung der Suspension wird ein feinkörniges Pulver aus dem eingangs genannten Material mit einer Korngröße kleiner/gleich 5 μm und den Zusätzen an organischen Lösungs- und Bindemitteln verwendet. Anschließend werden einzelne Schichten in der gewünschten Dicke durch Foliengießen hieraus gefertigt. Die Schichten werden aueinandergestapelt, bis die Folie 5 die gewünschte Höhe hat. Diese richtet sich nach der gewünschten Höhe der auszubildenden Kanäle 8. Anschließend werden Kanäle 8 in der gewünschten Breite ausgestanzt, wobei zwischen jeweils zwei benachbarten Kanälen ein Steg 8S verbleibt. Die Folie 6, die als elektrisch leitende Schicht 6 zur Serienschaltung der Brennstoffzellen dient, wird aus einer gasdichten elektronenleitenden Schicht 6M gebildet. Auf die erste Oberfläche der Schicht 6M ist die Schicht 6L aufgetragen, während auf der zweiten Oberfläche die Schicht 6B angeordnet ist. Für die Ausbildung der Schichten 6B,6M und 6L werden die eingangs beschriebenen Materialien verwendet. Zur Ausbildung der Schichten wird auch hierbei zunächst eine Suspension aus einem Pulver der hierfür bestimmten Materialien gebildet. Die Pulver für die Schicht 6M weisen eine Korngröße kleiner 1 μm auf. Die Pulver für die Schichten 6L und 6B haben eine Korngröße, die kleiner als 5 μm ist. Sie werden mit organischen Lösungsmitteln und einem organischen Bindemittel der genannten Zusammensetzung zu der Suspension vermischt.

Erfindungsgemäß können die drei Schichten 6L, 6M und 6B einzeln hergestellt, und anschließend aufeinandergesetzt werden. Es besteht andererseits die Möglichkeit, zunächst die Schicht 6M zu fertigen. Auf ihre erste Oberfläche wird dann die Schicht 6B in der gewüschten Dicke durch Seibdruck aufzutragen, während auf ihre zweite Oberfläche die Schicht 6L ebenfalls durch Seibdruck aufgebracht wird. Nach dem Fertigstellen der Folien 3,4,5 und 6 werden diese zur Ausbildung von einzelnen Brennstoffzellen 2Z in der gewünschten Reihenfolge aufeinandergesetzt. Zur Ausbildung einer Brennstoffzelle 2Z wird beispielsweise auf eine Folie 6 eine Folie 5 angeordnet. Auf der Oberfläche derselben wird eine Folie 3 positioniert. Auf diese wird eine Folie 4 aufgesetzt. Hierbei ist darauf zu achten, daß die Folie 4 so angeordnet wird, daß die Längsachsen der Kanäle 7 senkrecht zu den Längsachsen der Kanäle 8 verlaufen. Diese Folienfolge bildet eine Brennstoffzelle 2Z. Zur Ausbildung der Brennstoffzellenanordnung 1, wie sie in Fig. 1 dargestellt ist, wird auf die Folie 4 wiederum eine Folie 6 angeordnet, derart, daß die Schicht 6L der Folie 6 die Kanäle 7 begrenzt. Auf diese Folie 6 kann nun wiederum eine Folie 5 und eine Folie 3 sowie eine Folie 4 aufgesetzt werden. Die in Fig. 1 dargestellte Brennstoffzellenanordnung ist durch das Aufeinandersteplen dreier solcher Brennstoffzellen gebildet.

Nach dem Aufeinanderstapeln der Brennstoffzellen 2Z, wobei die Anzahl der Brennstoffzellen 2Z sich nach der Spannung richtet, die von der Brennstoffzellenanordnung 1 erzeugt werden soll, wird der ganze Stapel dauerhaft verbunden. Dies geschieht durch eine Wärmebehandlung. Zur Verbindung der Schichten und Folien untereinander wird die Brennstoffzellenanordnung 1 einer stufenweisen thermischen Behandlung unterzogen. In der ersten Stufe wird die Brennstoffzellenanordnung 1 mit einer Aufheizgeschwindigkeit von 1 bis 3° pro Minute auf 200°C erwärmt und dabei das in den Schichten und Folien enthaltene Lösungsmittel verdampft. Falls es erforderlich ist, wird ein bis mehrere Stunden bei konstanter Verdampfungstemperatur getempert. In der zweiten Stufe der Wärmebehandlung wird die Brennstoffzellenanordnung mit einer Aufheizgeschwindigkeit von 2 bis 5°C/Minute auf 700 bis 1000°C erwärmt. Hierbei werden die in den Schichten und Folien enthaltenen organischen Bindemittel bzw. Dispergiermittel in Anwesenheit von Luftsauerstoff ausgetrieben und zu $H_2O$ und $CO_2$ verbrannt. Zur Vervollständigung dieses Ausbrennungsvorgangs kann die Brennstoffzellenanordnung 1, falls es erforderlich ist, ein bis mehrere Stunden lang bei konstanter Temperatur getempert werden. Im dritten Schritt der Wärmenachbehandlung wird die Brennstoffzellenanordnung auf 1300 bis -1550°C erwärmt. Hierbei werden die Schichten bzw. Folien und die einzelnen Brennstoffzellen 2Z zu einem dauerhaft verbunden keramischen Block zusammengesintert. Die Sinterdauer beträgt bei der oben angegebenen Maximal temperatur je nach Größe des Blocks 1 bis 5 Stunden. Die Größe der Brennstoffzellenanordnung 1 kann je nach gewünschter elektrischer Leistung einige $cm^3$ bis einige $dm^3$ betragen. Zur Erzielung einer Leistung von 100 Watt wird eine Brennstoffzellenanordnung 1 mit einer Größe $5 \times 5 \times 5$ $cm^3$ benötigt, während für eine Leistung von 25 kW eine Brennstoffzellenanordnung 1 mit einer Größe von $3 \times 3 \times 3$ $cm^3$ erforderlich ist. Erfindungsgemäß besteht die Möglichkeit eine Vielzahl solcher Brennstoffzellenanordnungen 1 zu einem Modul zusammenzufassen, wenn eine größere Leistung, z.B. im Megawattbereich gewünscht wird.

## Ansprüche

1. Brennstoffzellenanordnung mit wenigstens einer Brennstoffzelle (2Z), die eine Anode (3A), eine Kathode (3K) und einen sauerstoffionenleitenden Festelektrolyten (3F) aufweist, dadurch gekennzeichnet, daß jede Brennstoffzelle (2Z) durch eine planare mehrschichtige Folie (3) gebildet ist, die eine als Anode dienende Schicht (3A), eine als Festelektrolyt dienende Schicht (3F) und eine als Kathode (3K) dienende Schicht aufweist.

2. Brennstoffzellenanordnung nach Anspruch 1, dadurch gekennzeichnet, daß auf der ersten Oberfläche der als Festelektrolyt dienenden Schicht (3E) die als Anode dienende Schicht (3A) und auf die zweite Oberfläche der Schicht (3E) die als Kathode dienende Schicht (3K) angeordnet ist.

3. Brennstoffzellenanordnung nach Anspruch 1 oder 2, dadurch gekennzeichnet, daß die Schicht (3E) gasdicht ausgebildet, 0,05 bis 0,15 mm dick und aus $(ZrO_2)_{0,09}(Y_2O_3)_{0.1}$ gefertigt ist, daß die poröse Schicht (3A) aus $Ni/ZrO_2$- bzw. $NiO/ZrO_2$ Cermet und die poröse Schicht (3K) aus Strontium dotiertem Lanthanmanganit oder $La(Sr)MnO_3/ZrO_2$ gefertigt ist, und daß die Schichten (3A) und (3K) eine Dicke von 0,1 bis 0,4 mm aufweisen.

4. Brennstoffzellenanordnung nach einem der Ansprüche 1 bis 3, dadurch gekennzeichnet, daß auf der Folie (3) eine Folie (4) angeordnet, die unmittelbar an die Schicht (3K) angrenzt, daß die Folie (4) aus mehreren Schichten (4A) aufgebaut ist, daß jede Schicht (4A) eine Dicke von 0,3 bis 0,8 mm aufweist und Strontium dotiertem Lanthanmanganit und Yttrium oder Kalzium dotiertem Zirkoniumdioxid gefertigt ist, und daß die Folie (4) mit mindestens einem durchgängigen Kanal (7) für den Transport von Luft oder Sauerstoff versehen ist, daß die Kanäle (7) an beiden Enden nach außen hin offen sind, 5 bis 20 mm breit, durch 1 bis 4 mm breite Stege (7S) voneinander getrennt un so ausgebildet sind, daß ihre Längsachsen in eine Ebene liegen und parallel zueinander ausgebildet sind, und daß die Kanäle (7) von den angrenzenden Folien (3K und 6) begrenzt sind, und ihre Höhe 1,5 bis 5mm beträgt.

5. Brennstoffzellenanordnung nach einem der Ansprüche 1 bis 4, dadurch gekennzeichnet, daß an die zweite Oberfläche der Folie (3) eine dritte Folie (5) unmittelbar angrenzt, die aus wenigstens einer, vorzugsweise mehreren Schichten (5A) aufgebaut ist, welche 0,3 bis -0,5 mm dick und aus Nickel/Zirkoniumdioxid Cermet Ni/ZrO$_2$ und 20 bis 80% mit Yttriumoxid oder Kalziumoxid stabilisiertem Zirkoniumdioxid gefertigt sind, daß die Folie (4) von wenigstens einem, vorzugsweise mehreren, Kanälen (8) durchsetzt ist, die an ihren beiden Enden nach außen hin offen sind, daß die Länsachsen der Kanäle (8) in einer Ebene liegen und parallel zueinander verlaufen, und daß je zwei benachbarte Kanäle (8) durch einen Steg (8S) mit einer Breite von 1 bis 4 mm voneinander getrennt sind, und daß die Längsachsen der Kanäle (8) senkrecht zu den Längsachsen der Kanäle (7) in der Folie (4) verlaufen, und daß die Kanäle (8) zu der Schicht (3K) der Folie (3) hin offen sind.

6. Brennstoffzellenanordnung nach einem der Ansprü che 1 bis 5, dadurch gekennzeichnet, daß jede Brennstoffzelle (2Z) wenigstens eine elektrisch leitende Schicht aufweist, die durch eine Folie (6) gebildet wird, und daß an die Folien (4 und 5) unmittelbar eine Folie (6) anschließt, und daß jede Folie (6) durch mindestens eine gasdichte elektronenleitende Schicht (6M) gebildet ist.

7. Brennstoffzellenanordnung nach einem der Ansprüche 1 bis 6, dadurch gekennzeichnet, daß die Folie (6) aus drei Schichten (6B,6L und 6M) gebildet ist, daß die Schicht (6M) gasdicht und elektronenleitend ausgebildet, 0,05 bis 0,15 mm dick und aus Strontium dotiertem Lanthanchromit oder aus Magnesium dotiertem Lanthanchromit mit oder ohne einem Zusatz an stabilisierten Zirkoniumdioxid gefertigt ist, daß die Schicht (6B) aus Nickel Zirkoniumdioxid Cermet Ni/ZrO$_2$ und die Schicht (6L) aus Strontium dotiertem Lanthanmanganit mit oder ohne Zusätze an stabilisiertem Zirkoniumdioxid hergestellt ist, und daß die Schichten (6B und 6L) 0,05 bis 0,3 mm dick sind, und die Folie (6) eine Gesamtdicke von 0,15 bis 1 mm aufweist.

8. Brennstoffzellenanordnung nach einem der Ansprüche 1 bis 7, dadurch gekennzeichnet, daß jede Brennstoffzellenanordnung (1) aus zwei, vorzugsweise mehreren, Brennstoffzellen (2Z) gebildet ist, die durch das Aufeinanderstapeln jeweils einer Folie (6), einer Folie (5), einer Folie (3), einer Folie (4) und einer Folie (6) gefertigt sind, an die sich die gleiche Reihenfolge von Folien (5,3,4) anschließt, und daß jede Brennstoffzellenanordnung (1) an ihren beiden Stirnflächen (1A und 1B) durch je eine Folie (6) nach außen hin begrenzt ist.

9. Verfahren zur Herstellung einer Brennstoffzellenanordnung, dadurch gekennzeichnet, daß jede Brennstoffzellenanordnung (1) durch das Aufeinandersetzen von ein- oder mehrschichtigen Folien (6,5,3,4) mit definierten Eigenschaften in einer definierten Reihenfolge gebildet wird, und daß die Folien (6,5,3,4) während einer Wärmenachbehandlung zu einer unlösbaren Einheit verbunden werden.

10. Verfahren nach Anspruch 9, dadurch gekennzeichnet, daß zur Ausbildung einer jeden Folie (3,4,5 und 6) die erforderlichen Schichten (3A,3E,3K,4A,5A und 6B,6L und 6M) separat hergestellt werden, daß im Anschluß daran aus den Schichten (3A,3E und 3K) die Folie (3), aus den Schichten (4A), die Folie (4), aus den Schichten (5A) die Folie (5) und aus den Schichten (6B,6M und 6L) die Folie (6) zusammengesetzt wird.

11. Verfahren nach einem der Ansprüche 9 oder 10, dadurch gekennzeichnet, daß zunächst die Schicht (3E) hergestellt wird, und daß auf ihre erste Oberfläche die Schicht (3A) und auf ihre zweite Oberfläche die Schicht (3K) aufgetragen wird, und daß zur Ausbildung der Folie (6) zunächst die Schicht (6M) gefertigt und anschließend auf ihre erste Oberfläche die Schicht (6B) und auf ihre zweite Oberfläche die Schicht (6L) unmittelbar aufgetragen wird.

12. Verfahren nach einem der Ansprüche 9 bis 11, dadurch gekennzeichnet, daß aus den Folien (4 und 5) Kanäle (7 und 8) ausgestanzt werden, und daß nach dem Aufeinanderstapeln der Folien (6,5,3,4) die Brennstoffzellenanordnung (1) auf die gewünschte Form zugeschnitten wird.

13. Verfahren nach einem der Ansprüche 9 bis 12, dadurch gekennzeichnet, daß zur Herstellung der Schicht (3E) eine Suspension bzw. ein Schlicker aus pulverförmigem, eine Korngröße kleiner/gleich 1 $\mu$m aufweisenden $(ZrO_2)_{0.9}(Y_2O_3)_{0.1}$ und einem organischen Bindmitteln in Form von Polyglykol mit einem Anteil von kleiner 3% bezogen auf die Menge des verwendeteten Pulvers, gebildet wird, daß die Schichten (3A und 3K) aus Suspensionen bzw. Schlickern hergestellt werden, die aus pulverförmigem La(Sr)MnO$_3$ bzw. Ni/ZrO$_2$ mit einer Korngröße von größer 5 $\mu$m und einem organischen Lösungsmittel bestehend aus einer Mischung aus Alkohol, Keton und Oleat und einem organischen Bindemittel bestehtnd aus einer Mischung von Polyglykol, Polyvinylbutyral und Octylphthalat mit einem Anteil von 8% hergestellt werden.

14. Verfahren nach einem der Ansprüche 9 bis 13, dadurch gekennzeichnet, daß die Schichten (4A und 5A) aus einem Schlicker gefertigt werden, der zur Ausbildung der Schichten (4A) aus pulverförmigem La(Sr)MnO$_3$ und 20% bis 60% ZrO$_2$/Y$_2$O$_3$ oder ZrO$_2$/CaO bzw. zur Ausbildung der Schichten (5A) aus einem Cermet aus Nickel und stabilisiertem Zirkoniumoxid mit einer Korngröße kleiner/gleich 3 $\mu$m unter Beimengung von organischen Lösungsmitteln und organischen Bindemitteln gebildet wird.

15. Verfahren nach einem der Ansprüche 11 bis 14, dadurch gekennzeichnet, daß daß die Schichten (6B, 6L und 6M) aus Suspensionen bzw.

Schlickern gefertigt werden, die aus pulverförmigem Ni/zrO Cermet, La(Sr)CrO₃ bzw. La(Sr)MnO₃ mit einer Korngröße kleiner 1 µm und Zusätzen aus organischen Lösungsmitteln und organischen Bindemitteln gebildet werden.

16. Verfahren nach einem der Ansprüche 9 bis 15, dadurch gekennzeichnet, daß zur dauerhaften Verbindung Brennstoffzellen (2Z) bzw. die zugehörigen Folien 6,5,3,4,6 usw. zur Brennstoffzellenanordnung (1) aufeinandergestapelt, mit einer Aufheizgeschwindigkeit von 1 bis 3°C/Min auf 200 bis 300°C erwärmt und dabei die in den Folien (3,4,5 und 6) enthaltenen Lösungsmittel verdampft werden, daß die Brennstoffzellenanordnung (1) ein oder mehrere Stunden bei konstanter Verdampfungstemperatur getempert wird, daß die Brennstoffzellenanordnung (1) im Anschluß daran mit einer Aufheizgeschwindigkeit von 2 bis 5°C/Min auf 700 bis 1000°C erwärmt und dabei die in den Folien (3,4,5 und 6) enthaltenen organischen Bindemittel in Anwesenheit von Luftsauerstoff ausgetrieben und zu $H_2O$ und $CO_2$ verbrannt werden, und die Brennstoffzellenanordnung (1) eine oder mehrere Stunden bei dieser Temperatur getempert wird, und daß die Brennstoffzellenanordnung (1) daraufhin auf 1300 bis 1550°C erwärmt und dabei die Schichten (3A,3E, 3K, 4A,5A,6B,6L und 6M) sowie die Folien (3,4,5 und 6) zu einer unlösbaren Brennstoffzellenanordnung (1) zusammengesintert werden.

# Fig.1

# Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN, Band 13, Nr. 493 (E-842)[3841], 8. November 1989; & JP-A-1 197 971 (MITSUBISHI HEAVY IND.) 09-08-1989 * Zusammenfassung * | 1,2,6,8,9, 11 | H 01 M 8/24 H 01 M 8/12 |
| X | PATENT ABSTRACTS OF JAPAN, Band 13, Nr. 176 (E-749)[3524], 25. April 1989; & JP-A-1 7475 (MITSUBISHI HEAVY IND.) 11-01-1989 * Zusammenfassung * | 1,2,9 | |
| X | PATENT ABSTRACTS OF JAPAN, Band 13, Nr. 235 (E-766)[3583], 30. Mai 1989; & JP-A-1 41 172 (MITSUBISHI HEAVY IND.) 13-02-1989 * Zusammenfassung * | 1,2,9 | |
| X | EP-A-0 275 661 (ALLIED SIGNAL INC.) * Patentansprüche 1,8; Spalte 10, Zeilen 42-47; Spalte 14, Zeile 47 - Spalte 15, Zeile 16; Spalte 15, Zeilen 48-55; Spalte 16, Zeilen 1-24 * | 1-3,7,9, 11 | |
| X | US-A-4 510 212 (A.V. FRAIOLI) * Spalte 10, Zeilen 21-51; Patentansprüche 5,6 * | 1,2,3,9 | RECHERCHIERTE SACHGEBIETE (Int. Cl.5) |
| X | US-A-4 476 197 (J.E. HERCEE) * Spalte 9, Zeilen 31-58; Spalte 10, Zeilen 16-25,42-50; Patentansprüche 1,10,11,12,20 * | 1,2,3,9 | H 01 M |
| A | US-A-4 799 936 (B. RILEY) * Patentanspruch 2; Spalte 6, Zeilen 50-53 * | 3 | |
| P,X | US-A-4 883 497 (T.D. CLAAR et al.) * Spalte 3, Zeile 44 - Spalte 5, Zeile 5; Patentansprüche 1-5 * | 1,2,3,9,11 | |

−/−

Der vorliegende Recherchenbericht wurde für alle Patentansprüche erstellt

| Recherchenort | Abschlußdatum der Recherche | Prüfer |
|---|---|---|
| Den Haag | 30 Januar 91 | D'HONDT J.W. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | WO-A-9 004 860 (ALLIED SIGNAL INC.) <br> * Patentansprüche 1,4,5,9,10; Seite 7, Zeilen 34-38; Seite 11, Zeile 9 - Seite 12, Zeilen 32-34; Seite 13, Zeilen 6-21; Seite 13, Zeile 37 - Seite 14, Zeile 4 * <br> — — — | 1,2,3,9,11 | |
| E | EP-A-0 395 975 (ASEA BROWN & BOVERI) <br> * Patentansprüche 1-6,11,12,16; Spalte 4, Zeile 44 - Spalte 5, Zeile 56; Spalte 6, Zeilen 34-56 * <br> — — — | 1-3,6,8,9, 10 | |
| X | PROCEEDINGS OF THE FIRST INTERNATIONAL SYMPO-SIUM ON SOLID OXIDE FUEL CELLS, Pittsburgh, PA, 16.-18. Oktober 1988, Band 89-11, Seiten 325-336; M. DO-KIYA et al.: "Overview of planar SOFC development at NCLI" <br> * Seite 327, letzter Absatz - Seite 328, Absatz 4 * <br> — — — — — | 1,2,8,9,11 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| Den Haag | 30 Januar 91 | D'HONDT J.W. |